Europäisches Patentamt

European Patent Office  (11) Publication number: **0 167 151**

Office européen des brevets  **A2**

(12)  # EUROPEAN PATENT APPLICATION

(21) Application number: **85108199.2**

(22) Date of filing: **02.07.85**

(51) Int. Cl.⁴: **B 65 G 53/22**
**B 01 J 8/00**

(30) Priority: **05.07.84 US 628043**

(43) Date of publication of application:
**08.01.86 Bulletin 86/2**

(84) Designated Contracting States:
**CH DE FR GB IT LI NL**

(71) Applicant: **ALUMINUM COMPANY OF AMERICA**
**Alcoa Building**
**Pittsburgh Pennsylvania(US)**

(72) Inventor: **DeLuca, Ronald Marino**
**5855 Anderson Road**
**Newburgh Indiana(US)**

(72) Inventor: **Winck, Russell Edward**
**8933 Hickory Lane**
**Newburgh Indiana(US)**

(72) Inventor: **Messer, Eugene**
**4300 Landsdowne Drive**
**Owensboro Kentucky(US)**

(74) Representative: **Baillie, Iain Cameron et al,**
**c/o Ladas & Parry Isartorplatz 5**
**D-8000 München 2(DE)**

(54) Dense phase pump.

(57) An improved dense phase pump for transporting particulate matter in a gaseous media is disclosed comprising a chamber having an inlet port for particulate matter, a conduit within the reservoir connecting an outlet port for the mixture of particulate matter and gaseous media with a collecting means, an inlet port for the gaseous media and a double dribble plate assembly positioned between the gas inlet port and the collecting means. The double dribble plate assembly comprises at least two plates each having openings therethrough which are out of registry with one another, the plates being spaced apart a sufficient distance whereby gas passing through the holes in one plate may pass through the holes in the second plate into the chamber to mix with the particulate matter and to sweep the mixture of particulate matter and gas out of the chamber through the collecting means.

EP 0 167 151 A2

./...

FIGURE 1

IMPROVED DENSE PHASE PUMP HAVING NOVEL NONCLOGGING PLATE ASSEMBLY

Background of the Invention

1. Field of the Invention

This invention relates to dense phase pumps. More particularly, this invention relates to improvements in the introduction of a gaseous transport media into a dense phase pump.

2. Background Art

The transport of solid materials in particulate form through a conduit is facilitated by the use of a gaseous transport media. It is, however, first necessary to form a mixture of the particulate matter and the transport media. When a gaseous transport media is to be used, a dense phase pump is utilized to provide a mixture of the particulate solid material and the transporting gas. The dense phase pump comprises a large chamber into which the particles of solid material are fed, for example, from the top of the chamber. The transport gas is introduced into the chamber through a plenum located at the bottom of the chamber. Conventionally, in the prior art, an air permeable ceramic material or an air permeable fabric, used either by itself or together with a perforated steel plate for support, was positioned over the plenum chamber to contain the particulate matter within the chamber, for example, when the transport gas flow was shut down for any reason. The transport gas passed from the plenum through the air permeable fabric or ceramic into the chamber where it mixed with the particulate solid material, and the mixture was then removed from the chamber through a collecting means to pass into the transport

1

conduit.

The air permeable fabric (either by itself or when supported by the perforated steel plate) or the air permeable ceramic have been found to function satisfactorily from the standpoint of the intended purpose of preventing backflow of the solid particulate matter into the entrance port of the gaseous transport media when the gas flow is shut off. However, it has been found that these permeable materials may easily become _ clogged or plugged up if the transport gas is not perfectly clean, i.e., free of foreign materials, such as solid materials, which may plug up the pores of the permeable fabric or ceramic. Economically, it is not always desirable to pass the transporting gas through preliminary cleaning means, such as bag houses or the like, particularly in view of the ultimate purpose of the gas, i.e., to transport solid dusty particulate matter through a conduit to a remote destination. Another alternative would be either to increase the pressure of the transport gas or to inject short bursts of high pressure to unclog the permeable member. However, this has been found, in some instances, to result in rupture of the gas permeable fabric or ceramic. Furthermore, such variations in the gas pressure may not be desirable if fluctuations in the pressure or velocity of the mixture of particulate and gaseous transport media result from this.

It would thus be desirable to provide a protective means for even distribution of the gas transport means into the dense phase pump chamber while preventing the backflow of

2

particulate matter into the entrance port without incurring the risk of clogging of the protecting means.

The use of a plenum beneath a fluidized bed to evenly distribute the passage of a gas into a fluidized bed is known in the art. For example, Knapp et al U.S. Patent 3,503,184 shows the use of a fluidized bed including a plenum chamber beneath a fluidized bed with a perforated plate positioned above the plenum to support the turbulent fluidized bed.

Huttlin U.S. Patent 4,320,089 shows a fluidized bed apparatus comprising a container with a perforated bottom plate having a plurality of large openings therein above each of which is secured a perforated cone. Fluid passing through an entrance duct into the container passes through the perforations in the plate and the perforations in the cone above the plate.

However, the operation of a fluidized bed in which an even amount of pressure must be distributed across the entire bed to provide a predetermined height of the bed of fluidized particles differs considerably in operation from a dense phase pump wherein the purpose is to create a mixture of the gas and particulate matter which all must flow from the dense phase pump chamber at a given velocity which is directly proportionate to the velocity of the entrance gas. That is, the static condition which results in maintenance of a particular fluidized bed height is not maintained within the dense phase pump.

### Summary of the Invention

It is therefore an object of the invention to provide an improved dense phase pump.

3

It is a further object of the invention to provide an improved dense phase pump wherein a gas permeable member, which is substantially free of the risk of clogging of the permeable member, is positioned between the entrance port and the mixing chamber of a dense phase pump to prevent the backflow of particles into the entrance port.

These and other objects of the invention will be apparent from the accompanying drawings and description.

In accordance with the invention, an improved dense phase pump for transporting particulate matter in a gaseous media is provided comprising a chamber having an inlet port for particulate matter, a conduit within the reservoir connecting an outlet port for the mixture of particulate matter and gaseous media with a collecting means, an inlet port for the gaseous media, and a nonclogging plate assembly positioned between the gas inlet port and the collecting means comprising at least two plates each having openings therethrough which are out of registry with one another, the plates being spaced apart a sufficient distance whereby gas passing through the holes in one plate may pass through the holes in the second plate into the chamber to mix with the particulate matter and to sweep the mixture of particulate matter and gas out of the chamber through the collecting means.

Figure 1 is a vertical cross section view of the dense phase pump of the invention.

Figure 2 is a top view of a section of the view of Fig. 1 taken along lines II-II.

4

Figure 3 is a horizontal cross-sectional view of a portion of the view shown in Fig. 1 magnified to show the perforations in a pair of perforated plates mounted in tandem.

## Description of the Preferred Embodiment

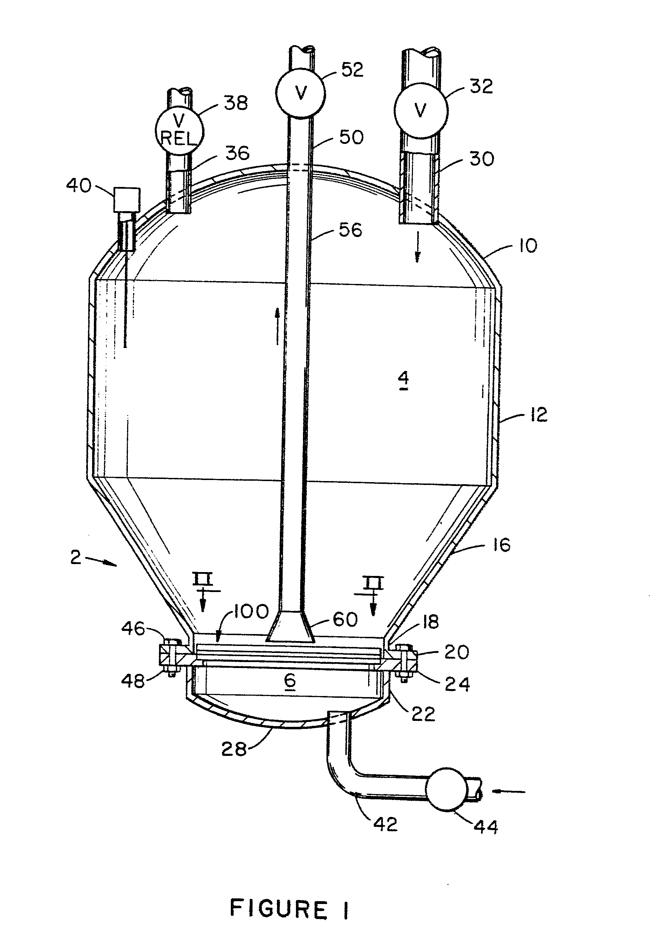

Turning now to Fig. 1, the dense phase pump of the invention is generally indicated at 2 comprising a chamber 4 having a spherical top wall 10 joined to a cylindrical side wall 12 which is attached to a conical section 16 which tapers down to a reduced cylindrical section 18 having a flange 20 thereon. Flange 20, in turn, is secured by bolts 46 and nuts 48 to a flange 24 connected to a cylindrical segment 22 which terminates in a hemispherical bottom portion 28. Mounted to spherical top wall 10 of chamber 4 is an inlet port 30 which is connected via valve 32 to an external source of particulate solid material which is to be transported to a remote location. Chamber 4 is also fitted with an auxiliary port 36 coupled to a fill vent valve 38 which will vent off displaced air during the filling sequence or mode. The vent valve also relieves pressure within the vessel prior to filling, entering on maintenance on the vessel. A level probe 40 is also provided which will sense overfilling of chamber 4 which would be indicative that the particulate/gaseous mixture is not being transported out of the pump. A discharge port 50 is fitted with a discharge valve 52 and a long conduit 56 which depends from export 50 down to a point adjacent a perforated plate that will presently be described. Conduit 50 is flared out adjacent the bottom end of the conduit into a funnel-shaped collection hood 60.

5

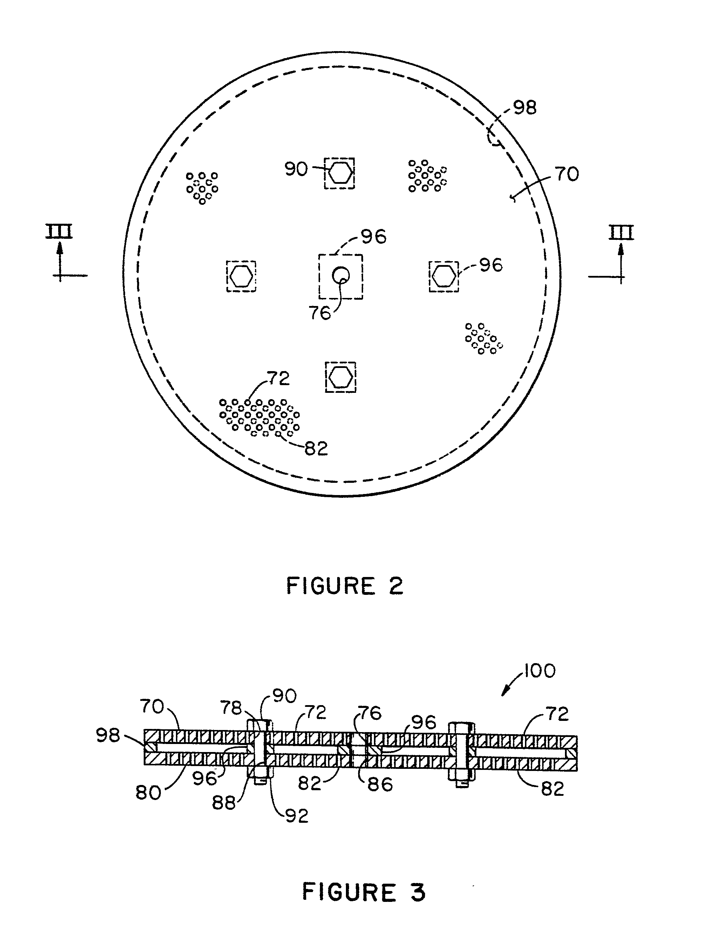

As previously mentioned, cylindrical sections 18 and 22 are each fitted, respectively, with flanges 20 and 24 which are used to bolt together cylindrical sections 18 and 22. Flange 24 has mounted thereto a pair of perforated plates 70 and 80 which comprise a double dribble plate assembly 100 as generally shown in Fig. 1 and as seen in more detail in Figs. 2 and 3.

The plate assembly 100 separates chamber 4 from a lower chamber 6 which may serve as a plenum for incoming transport gases which enter dense phase pump 2 from a remote source via gas inlet port 42 and gas inlet valve 44.

Referring further to the figures, double dribble plate assembly 100 (Fig. 3) comprises a pair of perforated plates which are slightly spaced apart as will presently be described.

Top plate 70 is fitted with a plurality of 1/8-inch diameter holes on 1/2-inch centers to permit the passage of gases therethrough. Plate 70 is also provided with a central alignment opening 76 and four auxiliary alignment openings 78. These openings serve to both align and permit securement of plate 70 with lower plate 80. As seen more clearly in Fig. 3, perforated plate 80 is also provided with a number of 1/8-inch diameter holes 82 which are also set on 1/2-inch centers. A central alignment opening 86 and auxiliary alignment openings 88 are also provided. Bolts 90, fitted into openings 78 and 88, as well as into openings 76 and 86, are secured by nuts 92 to mount plates 70 and 80 as a unit. A spacer element 96 is provided with each bolt to space the plates apart, preferably about 1/4-inch, for a reason which will be presently described. A similar bolt and nut (not shown) together with a spacer 96 secure the two plates together, with such bolt extending through 96 and central openings 76 and 86 in the plates. A peripheral spacer 98, which may be in the form of a gasket, is placed between plates 70 and 80 at the periphery of the plates. The plates may, after being secured together, be mounted as a unit to flange 24 (Fig. 1) prior to bolting of flange 24 to flange 20 with bolts 46.

Referring again to Fig. 3, it will be noted that the small openings or holes 72 in plate 70 are not in registration with the holes 82 in plate 80. The two plates are purposely constructed so that when the bolts 90 are placed through alignment holes 78 and 88 and the respective plates 70 and 80 are joined together as an assembly, the fine holes 72 and 82 will not be in alignment or in registration. Therefore, if solid particulate material enters chamber 4 of dense phase pump 2 when the gas stream is not flowing, any particles which fall through opening 72 will not necessarily also fall through openings 82 but will rather collect in space 100 between plates 70 and 80 which has been formed by the use of the spacer members 96 and the peripheral gasket 98.

It should be noted that the positioning of plates 70 and 80 and the formation of the space 100 therebetween is not intended to function as a plenum. That is, there is an insufficient total volume in the space 100 to actually function as a plenum, i.e., where a chamber is pressurized to provide an

7

even amount of pressure through a particular perforated plate. Rather the spacing 100 only need be sufficient to permit the passage of a gas passing through holes 82 to reach the holes 72. Obviously, if the two plates were placed together in direct abutment and the holes 72 and 82 were in complete registration, particulate matter could fall through the holes, thus defeating the purpose of a dual plate. Alternatively, if the two sets of holes 72 and 82 were not in registration and the plates were in direct abutment, there would be no way for the gas to pass through both sets of openings. Thus, the spacing is merely sufficient to permit the passage of gas through the first set of holes 82 to reach the set of holes 72 in top plate 70.

In practice then, the transport gas, which preferably comprises plant air, which is an economical air source, passes through gas entrance valve 44 and gas entrance port 42 at a pressure of from about 20 to about 100 psi, into the lower portion 6 of chamber 4 which may function as a plenum chamber. The transport gas then passes first through holes 82 in plate 80 and then, after passing through space 100, passes through holes 72 in plate 70 into the main chamber 4. At the same time, particulate matter, such as, for example, particulate alumina having a particle size range of from a fraction of a micron to about 250 microns, is admitted into chamber 4 through valve 32 and entrance port 30. The gases entering at the bottom of chamber 4 entrain the falling particles and form a swirling turbulent mixture which is then forced through the flared out inlet hood 60 of exit conduit 56 where it passes out of chamber

8

4 via exit port 50 and exit port valve 52 to an external transport pipe (not shown) which will conduct the particulate/gas mixture to a remote storage receptacle or other destination point for the particulate, such as, for example, a Hall cell when the particulate comprises alumina particles.

Thus, the invention provides an improved dense phase pump wherein a dual perforated plate replaces a permeable fabric or permeable ceramic to permit the entrance of a high pressure transport gas into the main chamber of the dense phase pump to entrain particulate matter in the gas flow for eventual transport to a remote destination. The plurality of perforated plates permits the passage therethrough of large amounts of gas without particular regard to the presence or absence of some particulate matter in the entering gas unlike the prior art use of the permeable fabric or ceramic. However, at the same time, the retainment feature of the permeable members of the prior art have been retained in this design in that shut down of the dense phase pump will not result in loss of the particulate matter from the chamber.

While the invention has been described in terms of preferred embodiments, the claims appended hereto are intended to encompass all embodiments which fall within the spirit of the invention.

What is claimed is:

1. An improved dense phase pump for transporting a mixture of particulate matter in a gaseous media comprising:

(a) a chamber having an inlet port for particulate matter;

(b) an outlet port for the mixture of said particulate matter and said gaseous media;

(c) a conduit within said chamber connecting said outlet port with a collecting means;

(d) a gas inlet port for said gaseous media; and

(e) a perforated plate assembly positioned between said gas inlet port and said collecting means comprising at least two plates each having a plurality of holes therethrough which are out of registry with one another, said plates being spaced apart a sufficient distance whereby gas passing through said holes in one plate may pass through said holes in the second plate and enter said chamber to mix with said particulate matter and to sweep said mixture of particulate matter and gas out of said chamber through said collecting means.

2. The dense phase pump of Claim 1 wherein the plates are provided with alignment openings therein and fastening means are received in said alignment openings to secure the assembly of plates together in a predetermined alignment wherein the holes in one plate are out of registry with the holes in the other plate.

3.    The dense phase pump of Claim 1 wherein spacer means carried by said fastening means are positioned between said plates to provide a sufficient distance therebetween to permit said gaseous media passing through the holes in one plate to reach the holes in the other plate despite the nonregistration of the holes.

4.    The dense phase pump of Claim 1 wherein said particulate matter is alumina.

5.    The dense phase pump of Claim 4 wherein said alumina has a particle size distribution of a fraction of a micron to about 250 microns.

6.    The dense phase pump of Claim 1 wherein said gaseous media is introduced into said chamber at a pressure of from about 20 to about 100 psi.

0167151

FIGURE 1

0167151

FIGURE 2

FIGURE 3